# EUROPEAN PATENT SPECIFICATION

(11) **EP 3 483 232 B1**
(45) Date of publication and mention of the grant of the patent: **04.05.2022**
(21) Application number: 17824325.9
(22) Date of filing: 06.07.2017
(51) Int. Cl.: C09K 3/10, B29C 73/02, B60C 1/00, C08K 5/09, C08L 9/00, C08L 9/04, C08L 9/08, C08L 13/02, C08K 5/053

(54) **PUNCTURE SEALANT**
DURCHSTICHDICHTMITTEL
PRODUIT D'OBTURATION POUR CREVAISON

(30) Priority: 08.07.2016 JP 2016135838
(43) Date of publication of application: 15.05.2019
(73) Proprietor: Kakuichikasei CO., LTD, Suita City, Osaka, 564-0051 (JP)
(72) Inventor: NAKAMURA Satoshi, Tokyo 104-8340 (JP); KUBOTA Jun, Tokyo 104-8340 (JP)
(74) Representative: Oxley, Robin John George
(86) International application number: PCT/JP2017/024827
(87) International publication number: WO 2018/008722

(56) References cited:
- EP-A1- 1 826 255
- WO-A1-2009/104050
- WO-A1-2012/085869
- JP-A- 2006 152 239
- JP-A- 2013 166 892
- JP-A- 2013 166 892
- JP-A- 2014 505 137

## Description

### Technical Field

The present invention relates to a puncture sealant used for sealing a punctured tire.

### Background Art

In recent years, a puncture repair kit in which a puncture sealant, a small-sized compressor and the like are set is introduced as standard or optional equipment in automobiles.

The puncture sealant must be able to be used at low temperature through high temperature so that the puncture sealant can be used without problems in a temperate region through a cold region.

Known as conventional sealants are, for example, 1) a puncture sealant for tires containing a rubber latex and 1,3-propanediol and having a ratio of 55 to 61% by mass of 1,3-propanediol in a liquid component (refer to, for example, patent document 1), 2) a puncture sealant for tires containing a rubber latex, a tackifier such as terpene resins and rosin resins, an antifreezing agent, and a surfactant including diol (ethylene glycol and the like) having solubility parameter of 15 or more and diol (propylene glycol and the like) having solubility parameter of 14 or less as constituting units (refer to, for example, patent document 2), and 3) a puncture sealant for tires containing a rubber latex, a rosin resin having a softening point of 85°C or higher, 1,3-propanediol, and a nonionic surfactant (refer to, for example, patent document 3).

In patent documents 1 to 3 described above, the puncture sealants prepared by using the synthetic rubber latex are inferior in a repairing property at low temperatures and therefore usually contain a tackifier such as terpene resins and rosin resins.

However, if the tackifier such as terpene resins and rosin resins is increased in an amount in the sealant, the tire is improved in a repairing property at low temperatures but reduced in a low temperature stability, and the problem that the low temperature repair property and the low temperature stability cannot be highly compatible is still involved therein. Thus, the puncture sealing performance is still desired to be further improved in the current state.

### Conventional Art Documents

### Patent documents

Patent document 1: Japanese Patent Application Laid-open No. 2014-40505 (claims, examples and others)
Patent document 2: Japanese Patent Application Laid-open No. 2015-30761 (claims, examples and others)
Patent document 3: Japanese Patent Application Laid-open No. 2015-98538 (claims, examples and others)

### Disclosure of the Invention

### The problems to be solved by the invention

The present invention intends to solve the problems and the current state of the conventional art described above, and an object thereof is to provide a tire puncture sealant which causes a low temperature repair property and a low temperature stability to be highly compatible and which is excellent as well in a puncture sealing property.

### The means to solve the problems

In light of the problems on the conventional art described above, intense investigations repeated by the present inventors have resulted in finding that a puncture sealant which meets the object described above is obtained by having no tackifier and controlling a ratio of gelation to a specific value or higher at -25°C in a puncture sealant containing at least a synthetic rubber latex, and thus the present invention has been come to complete.

That is, the puncture sealant of the present invention contains a synthetic rubber latex and is characterized in that there is no tackifier and that a ratio of gelation is 0.05% or more at -25°C in Maron mechanical stability test based on JIS K6387-1: 2011.

A tire puncture sealant which causes a low temperature repair property and a low temperature stability to be highly compatible and which is excellent as well in a puncture sealing property is obtained according to the constitution described above.

The puncture sealant described above contains no tackifier.

The puncture sealant further contains two or more kinds of emulsifiers.

The emulsifier described above comprises 50% by mass or less of oleic acid or a salt thereof based on the total amount of the emulsifier and at least one emulsifier having a higher melting point than the melting point of oleic acid or salt thereof concerned.

The emulsifier having a higher melting point than the melting point of oleic acid or salt thereof described above contains preferably at least one of stearic acid or a salt thereof and elaidic acid or a salt thereof.

A content of oleic acid described above is preferably 25% by mass or more and 50% by mass or less based on the total amount of the emulsifier.

The synthetic rubber latex described above is at least one selected from the group consisting of SBR latex, NBR latex, MBR latex, BR latex, carboxyl-modified NBR latex, and carboxyl-modified SBR latex, and SBR latex is particularly preferable.

### Effect of the invention

According to the present invention, provided is a puncture sealant which causes a low temperature repair property and a low temperature stability to be highly compatible and which is excellent as well in a puncture sealing property.

### Best Mode For Carrying Out The Invention

The present invention shall be specifically explained below by showing the examples of the embodiment thereof.

The puncture sealant of the present invention contains a synthetic rubber latex and is characterized in that there is no tackifier and that a ratio of gelation is 0.05% or more at -25°C in Maron mechanical stability test based on JIS K6387-1: 2011.

Various synthetic rubber latex can be used as the synthetic rubber latex used in the present invention and is selected from the group consisting of SBR (styrene butadiene rubber) latex, NBR (nitrile rubber) latex, MBR (butadiene·methacrylic acid copolymer rubber) latex, BR (polybutadiene rubber) latex, carboxy-modified NBR latex, and carboxy-modified SBR latex.

From the viewpoint of securing the better sealing property, the synthetic rubber latex is at least one selected from the group consisting of SBR latex, NBR latex, MBR latex, BR latex, carboxyl-modified NBR latex, and carboxyl-modified SBR latex, and SBR latex is particularly preferable.

A content of the synthetic rubber latex falls preferably in a range of 5 to 30% by mass in terms of a solid concentration based on the total amount of the puncture sealant from the viewpoint of the sealing holding performance.

In the puncture sealant of the present invention, latex such as an NR (natural rubber) latex and a synthetic resin latex in addition to the synthetic rubber latex described above may be used in combination as long as the effects of the present invention are not deteriorated, but only the synthetic rubber latex is preferably used.

In the present invention, from the viewpoint of improving the low temperature repair property without daeteriorating the low temperature stability, no tackifier is contained.

Capable of being listed as the usable tackifier are, for example, natural resins, modified rosins and derivatives of the modified rosins, terpene resins and terpene modified products, aliphatic hydrocarbon resins, cyclopentadiene resins, aromatic petroleum resins, phenol resins, alkylphenolacetylene resins, styrene resins, xylene resins, coumarone·indene resins, and vinyltoluene-α-methylstyrene copolymers.

The natural resin includes rosin, dammar and the like. The modified rosins and the derivatives of the modified rosins include polymerized rosins (for example, rosin acid ester resins and the like), partially hydrogenated rosins, and the like. The terpene resins and the terpene modified products include pinene, α-pinenephenol resins, dipenetenephenol resins, terpenephenol resins such as terpenebisphenol resins, and resins obtained by hydrogenating the resins described above. The aliphatic hydrocarbon resins include olefin, olefin polymers and the like. Acrylic tackifiers, water-soluble tackifiers and the like can be used as the resin tackifiers.

The tackifiers described above can be used in the range described above (0 ≤ tackifier content < 2% by mass).

An antifreezing agent is preferably contained in the puncture sealant of the present invention.

The antifreezing agent which can be used shall not specifically be restricted, and ethylene glycol, propylene glycol (1,2-propanediol), 1,3-propanediol and the like can be used.

A content of the antifreezing agents described above is preferably 10 to 50% by mass, more preferably 20 to 50% by mass and further preferably 30 to 50% by mass based on the total amount of the sealant. The content of the antifreezing agent controlled to 10% by mass or more makes the antifreezing property at low temperatures satisfactory, and that controlled to 50% by mass or less provides a suitable amount of the antifreezing agent such as glycols with respect to an amount of the synthetic rubber latex, so that the satisfactory sealing property is obtained.

Two or more kinds of emulsifiers are contained in the puncture sealant of the present invention in order to further exert the effects of the present invention.

The emulsifier which can be used comprises oleic acid or salt thereof (for example, alkali metal salts, hereinafter the same shall apply) and one or more emulsifier having a higher melting point than melting point of oleic acid or salt thereof concerned from the viewpoint of compatibility with the latex.

The emulsifier having a higher melting point than the melting point of oleic acid or the salt thereof includes, for example, stearic acid or salt thereof, elaidic acid or salt thereof, lauric acid or salt thereof, myristic acid or salt thereof, palmitic acid or salt thereof, and the like, and the emalsifier contains preferably at least one of stearic acid or salt thereof and elaidic acid or salt thereof from the viewpoint of the low temperature repair property.

In the respective emulsifiers described above, oleic acid has a melting point of 13 to 14°C; stearic acid has a melting point of 67 to 72°C; elaidic acid has a melting point of 43 to 47°C; lauric acid has a melting point of 44 to 46°C; myristic acid has a melting point of 52 to 54°C; and palmitic acid has a melting point of 58 to 62°C.

A content of the emulsifiers described above is preferably 1 to 15% by mass, more preferably 1 to 10% by mass and further preferably 1 to 5% by mass based on the total amount of the puncture sealant.

The content of the emulsifier modified to 1% by mass or more makes it possible to secure the low temperature repair property, and on the other hand, the content modified to 15% by mass or less makes it possible to secure the low temperature stability.

From the viewpoints of the low temperature repair property and the low temperature stability, the content of oleic acid is particularly preferably 25% by mass or more and 50% by mass or less based on the total amount of the emulsifier.

Stearic acid and elaidic acid are particularly preferably used as the emulsifier other than oleic acid. A content of stearic acid is preferably 25% by mass or more and 50% by mass or less, and a content of elaidic acid is preferably 10% by mass or more and 30% by mass or less based on the total amount of the emulsifier.

Water (refined water, distilled water, tap water, purified water, ultra purified water and the like) can be added for dilution in the puncture sealant of the present invention. Further, conventional dispersants, foaming stabilizers, pH modifiers such as ammonia and caustic soda, antiaging agents, antioxidants, UV absorbers, stabilizers and the like may be further added to the puncture sealant of the present invention as long as the effects of the present invention are not deteriorated.

From the viewpoints of improving the puncture sealing property and exerting the effects of the present invention, the puncture sealant of the present invention has to have a ratio of gelation of 0.05% or more at -25°C in Maron mechanical stability test based on JIS-K6387-1: 2011, and the ratio of gelation is preferably 0.07% or more and more preferably 0.07 to 0.45%. An upper limit thereof is preferably 1% or less from the viewpoint of securing the injection property into the tire.

In the present invention, the puncture sealing property is improved by modifying the ratio of gelation described above to 0.05% or more. To explain in detail the puncture repairing mechanism of a tire for which the puncture sealant is used, a puncture hole of the tire is repeatedly opened and closed according to the rotation of the tire, and when the puncture hole is closed, a large shear is applied to a wall surface of the puncture hole to cause the shear to solidify the repairing liquid in the puncture hole. The solidified synthetic rubber latex stucks the puncture hole to complete the repairing. The solidified synthetic rubber latex is provided with a mechanical stability by this phenomenon. To be specific, a synthetic rubber latex is usually stabilized due to a repulsive force between negative charges of the emulsifier surrounding a rubber latex particle. The rubber latex is solidified by attaching of the particles by applying a larger force than the repulsive force to the particles. In repairing the tire, the more the coagulated matter is liable to be produced by the phenomenon described above, that is, the lower the mechanical stability of the puncture sealant is, the higher the sealing performance of the puncture sealant is. The ratio of gelation of the synthetic rubber latex by Maron mechanical stability test which is a scale of the mechanical stability has a high correlation with a running distance necessary for tire repairing. That is, the lower mechanical stability by Maron mechanical stability test the puncture sealant has, the faster rate of sealing the puncture hole the puncture sealant has. That is, the puncture sealing property is improved by modifying the ratio of gelation to 0.05% or more in the present invention.

In the present invention (including examples and the like described later), the ratio of gelation is a value measured on the following measuring conditions in Maron mechanical stability test based on JIS-K6387-1: 2011. Measuring conditions:
Maron mechanical stability test equipment: model PM9302MT, manufactured by Tester Sangyo Co., Ltd.
Amount of the puncture sealant: 100 (g)
Load: 30 kgf
Rotor revolution: 1000 rpm, time: 5 minutes
Ratio of gelation measurement at -25°C: measured by cooling the vessel and the sealant so that a liquid temperature after 2.5 minutes since beginning of the test is -25°C.

In the present invention, the ratio of gelation described above can be adjusted to 0.05% or more by suitably controlling the kind of the solidified synthetic rubber latex used, the kind of the tackifier and a content thereof (0 ≤ tackifier content < 2% by mass), and the antifreezing agent, the emulsifier and water which are preferably used.

In the puncture sealant of the present invention, a puncture hole can surely be sealed by modifying the ratio of gelation to 0.05% or more, and stability in long term storage and the injection property into the tire can be improved by modifying the ratio of gelation to 1% or less.

A reason why the puncture sealant of the present invention thus constituted causes a low temperature repairing property to be highly compatible with a low temperature stability and is excellent as well in a puncture sealing property is estimated as follows.

In the present invention, the low temperature repair property can be improved without deteriorating the low temperature stability by containing the synthetic rubber latex and modifying a content of the tackifier to less than 2% by mass, and the puncture sealing property can be enhanced by modifying the ratio of gelation to 0.05% or more at -25°C in the Maron mechanical stability test based on JIS-K6387-1: 2011. The matters described above make it possible to exert the effects of the present invention.

In the present invention, the puncture sealant which causes a low temperature repair property and a low temperature stability to be highly compatible and which is more excellent as well in a puncture sealing property is obtained by further containing two or more kinds of emulsifiers, preferably oleic acid or a salt thereof and at least one emulsifier having a higher melting point than that of oleic acid or salt thereof concerned, particularly preferably at least one of stearic acid or salt thereof and elaidic acid or salt thereof.

Commonly known methods can be applied as a method for repairing puncture by the puncture sealant of the present invention. In the case of, for example, tires for automobiles, a container in which the puncture sealant is filled is inserted into a valve of the tire for an automobile to inject a suitable amount. Then, the tire is rotated so that the puncture sealant can be spread in an inner surface of the tire to seal the puncture hole.

Also, the puncture sealant of the present invention can be applied for repairing puncture of various pneumatic tires. In addition to the tires for automobiles, the puncture sealant can be applied to, for example, tires for motorcycle, tires for monocycle, tires for wheelchairs, tires for vehicles used for agricultural land work and garden work, and the like.

The puncture sealant itself of the present invention can be introduced into a tire by using various pump-up devices, for example, spray cans containing a propane·butane mixed gas as a fuel gas to re-expand the tire.

### EXAMPLES

Next, the present invention shall be explained more specifically with reference to examples and comparative examples, but the present invention shall not be restricted to examples and comparative examples.

### [Examples 1 to 9 and Comparative Examples 1 to 3]

Materials [SBR latex: 100 parts by mass, propylene glycol + water: 120 parts by mass, tackifier (% by mass), and emulsifier (parts by mass)] shown in the following Table 1 were mixed so that the respective ratios were achieved to prepare puncture sealants according to Examples 1 to 9 and Comparative Examples 1 to 3.

Described respectively in Table 1 were a content of propylene glycol (parts by mass) based on 100 parts by mass of the SBR latex and a content (% by mass) thereof based on the total amount of the puncture sealant, a content (solid concentration) of the tackifier based on the total amount of the puncture sealant, and a content of the emulsifier (parts by mass) based on 100 parts by mass of the SBR latex and a content (% by mass) thereof based on the total amount of the puncture sealant.

The respective puncture sealants obtained were used to calculate ratios (%) of gelation at -25°C which are indices of the low temperature repair property on the measuring conditions described above and evaluate stability and the puncture sealing property by the following evaluation methods. The evaluation results thereof and the like are shown in the following Table 1.

### (Evaluation method of stability)

The respective puncture sealants obtained were equipped with a housing container having a cap for visibility and stored for 28 days in a thermostatic chamber of -5°C, and the container was vibrated at a vibration condition of 2 Hz and an amplitude of 20 mm by means of a vibration tester (FLK-L180-E, manufactured by AS ONE Corporation) to examined by sensory evaluation with visual observation whether or not gelled matters were present based on the following evaluation criteria.

### Evaluation criteria:

⊚: no gels are stuck on the container
∘: gels are slightly stuck on the container
△: gels are stuck on the container
×: a large amount of gels is stuck on the container

### (Evaluation method of puncture sealing property)

A hole of φ 2.6 mm was drilled through a tire of 195/65R15, and the puncture sealant 450 ml was injected thereinto to elevate an inner pressure of the tire up to 0.2 MPa, followed by mounting the tire in the car. Then, the car was subjected to run at 60 km/h or less to evaluate the puncture sealing property on the following evaluation criteria.

### Evaluation criteria:

⊚: reduction in the inner pressure was 0 after running 3 km or less, and the sealant was completely cured
∘: reduction in the inner pressure was 0 after running 5 km, and the sealant was completely cured
△: reduction in the inner pressure was 0 after running 10 km or more, and the sealant was completely cured
×: the inner pressure was reduced, and air was judged to leak from the repaired part

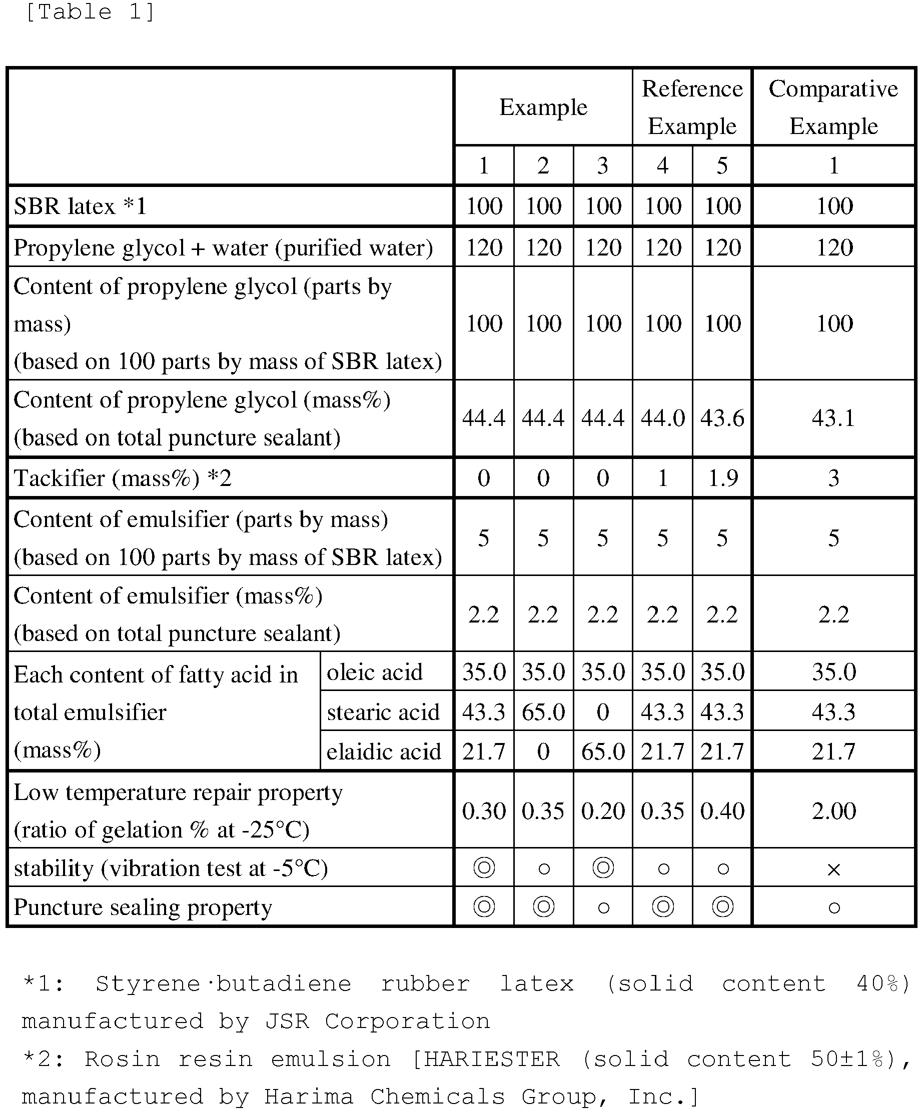

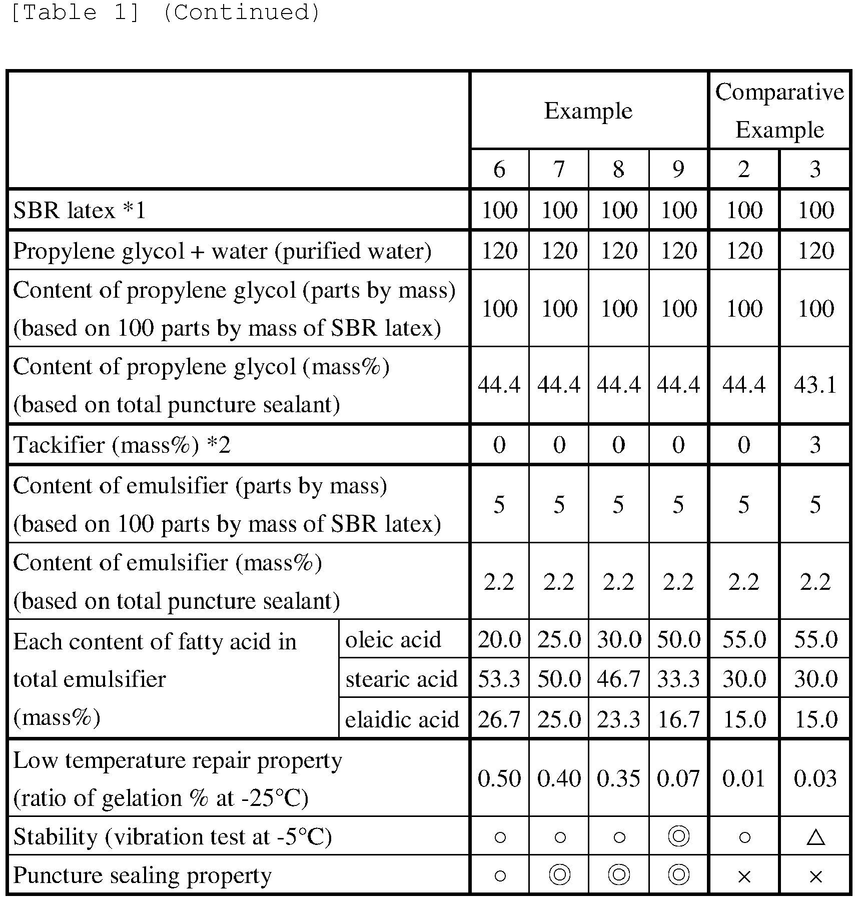

As apparent from the results shown in Table 1 described above, it was confirmed that in the puncture sealants prepared in Examples 1 to 9 according to the present invention, good results were obtained in terms of any of the low temperature repair property, stability and the puncture sealing property and that on the other hand, at least one of the low temperature repair property, stability and the puncture sealing property was inferior in the puncture sealants prepared in Comparative Examples 1 to 3.

To observe individually the examples, no tackifier was contained (0.01% by mass or less), and the amounts (ratio) of the respective fatty acids in the emulsifiers were varied in Examples 1 to 3 and 6 to 9. In Examples 4 and 5, the tackifier was varied (contained up to the prescribed range of the present invention) correspondingly to Example 1, and it becomes confirmed that in these cases, the effects of the present invention can be exerted. On the other hand, to observe Comparative Examples 1 to 3, in Comparative Example 1 (contrast to Examples 1, 4, and 5), the tackifier (solid concentration) was contained in 3% by mass, and in Comparative Examples 2 and 3, the ratio of gelation at -25°C in the Maron mechanical stability test was less than 0.05 %, so that the effects of the present invention could not be exerted.

### INDUSTRIAL APPLICABILITY

Obtained is a puncture sealant capable of being applied for repairing puncture of pneumatic tires such as tires for automobiles, tires for motorcycle, tires for monocycle vehicles, tires for wheelchairs, and tires for vehicles used for agricultural land work and garden work.

## Claims

1. A puncture sealant containing a synthetic rubber latex, two or more emulsifiers, and no tackifier and a ratio of gelation of 0.05% or more at -25°C in Maron mechanical stability test based on JIS K6387-1 : 2011,
wherein the emulsifier comprises 50% by mass or less of oleic acid or salt thereof based on the total amount of the emulsifier and at least one emulsifier having a higher melting point than the melting point of oleic acid or salt thereof concerned, and
wherein the synthetic rubber latex is at least one selected from the group consisting of SBR latex, NBR latex, MBR latex, BR latex, carboxyl-modified NBR latex, and carboxyl-modified SBR latex.

2. The puncture sealant as described in claim 1, wherein the emulsifier having a higher melting point than the melting point of oleic acid or salt thereof contains at least one of stearic acid or salt thereof and elaidic acid or salt thereof.

3. The puncture sealant as described in claim 1 or 2, wherein a content of oleic acid is 25% by mass or more based on the total amount of the emulsifier.

4. The puncture sealant as described in any one of claims 1 to 3, wherein the synthetic rubber latex is SBR latex.

## Patentansprüche

1. Einstichabdichtmittel enthaltend einen Synthesekautschuklatex, zwei oder mehr Emulgatoren und keinen Klebrigmacher und ein Gelbildungsverhältnis aufweisend von 0,05 % oder mehr bei -25 °C im mechanischen Maronstabilitätstest auf der Basis von JIS K6387-1 : 2011,
wobei der Emulgator 50 Masse-% oder weniger Ölsäure oder Salz davon, auf die Gesamtmenge des Emulgators bezogen, und mindestens ein Emulgator, der einen höheren Schmelzpunkt als den Schmelzpunkt der jeweiligen Ölsäure oder des Salzes davon aufweist, umfasst, und
wobei der Synthesekautschuklatex mindestens einer ist ausgewählt aus der Gruppe bestehend aus SBR-Latex, NBR-Latex, MBR-Latex, BR-Latex, carboxylmodifiziertem NBR-Latex und carboxylmodifiziertem SBR-Latex.

2. Einstichabdichtmittel wie in Anspruch 1 beschrieben, wobei der Emulgator, der einen höheren Schmelzpunkt als den Schmelzpunkt von Ölsäure oder dem Salz davon aufweist, mindestens eines von Stearinsäure oder dem Salz davon und Elaidinsäure oder dem Salz davon enthält.

3. Einstichabdichtmittel wie in Anspruch 1 oder 2 beschrieben, wobei ein Gehalt von Ölsäure 25 Masse-% oder mehr, auf die Gesamtmenge des Emulgators bezogen, beträgt.

4. Einstichabdichtmittel wie in einem der Ansprüche 1 bis 3 beschrieben, wobei der Synthesekautschuklatex SBR-Latex ist.

## Revendications

1. Agent d'obturation pour crevaison contenant un latex de caoutchouc synthétique, deux ou plusieurs émulsifiants, et aucun agent d'adhésivité et présentant un taux de gélification de 0,05 % ou plus à -25 °C dans un essai de stabilité mécanique de type Maron selon la norme JIS K6387-1 : 2011,
dans lequel l'émulsifiant comprend 50 % en masse ou moins d'acide oléique ou d'un sel de celui-ci, rapporté à la quantité totale de l'émulsifiant et au moins un émulsifiant ayant un point de fusion supérieur au point de fusion de l'acide oléique ou du sel de celui-ci concerné, et
dans lequel le latex de caoutchouc synthétique est au moins l'un sélectionné dans le groupe composé d'un latex de SBR, d'un latex de NBR, d'un latex de MBR, d'un latex de BR, d'un latex de NBR modifié avec un groupe carboxyle et d'un latex de SBR modifié avec un groupe carboxyle.

2. Agent d'obturation pour crevaison tel que décrit dans la revendication 1, dans lequel l'émulsifiant ayant un point de fusion supérieur au point de fusion de l'acide oléique ou du sel de celui-ci contient au moins l'un de l'acide stéarique ou d'un sel de celui-ci et de l'acide élaïdique ou d'un sel de celui-ci.

3. Agent d'obturation pour crevaison tel que décrit dans la revendication 1 ou 2, dans lequel une teneur en acide oléique est de 25 % en masse ou plus, rapporté à la quantité totale de l'émulsifiant.

4. Agent d'obturation pour crevaison tel que décrit dans l'une quelconque des revendications 1 à 3, dans lequel le latex de caoutchouc synthétique est du latex de SBR.
